# EUROPÄISCHE PATENTSCHRIFT

(11) **EP 3 766 684 B1**
(45) Veröffentlichungstag und Bekanntmachung des Hinweises auf die Patenterteilung: **09.11.2022**
(21) Anmeldenummer: 19186564.1
(22) Anmeldetag: 16.07.2019
(51) Int. Cl.: B32B 3/26, B32B 3/30, B32B 7/06, B32B 7/12, B32B 15/08, B32B 15/20, B32B 27/08, B32B 27/32, B65D 51/20, B65D 43/02, B65D 77/20

(54) **VERBUNDMATERIAL ZUR HERSTELLUNG VON PLATINEN UND DARAUS HERGESTELLTE PLATINEN**
COMPOSITE MATERIAL FOR PRODUCING LIDS AND LIDS MADE THEREFROM
MATÉRIAU COMPOSITE DESTINÉ À LA FABRICATION DE PLATINES ET PLATINES FABRIQUÉES À PARTIR DUDIT MATÉRIAU COMPOSITE

(43) Veröffentlichungstag der Anmeldung: 20.01.2021
(73) Patentinhaber: Constantia Teich GmbH, 3205 Weinburg (AT)
(72) Erfinder: Wegenberger, Alfred, 3550 Langenlois (AT); Schedl, Adolf, 3180 Lilienfeld (AT); Kornfeld, Martin, 3400 Klosterneuburg (AT); Steiner, Matthias, 3205 Weinburg (AT)
(74) Vertreter: Patentanwälte Barger, Piso & Partner

(56) Entgegenhaltungen:
- EP-A1- 2 327 635
- EP-B1- 2 327 635
- WO-A1-2008/006123

## Beschreibung

Die Erfindung betrifft ein Verbundmaterial zur Herstellung von Platinen zum Verschließen von Behältern, entsprechend dem Oberbegriff des Anspruches 1, daraus hergestellte Platinen entsprechend dem Oberbegriff des Anspruches 7, und der EP 2 040 915 der Anmelderir

EP 2 040 915 offenbart ein Verbundmaterial zur Herstellung von Platinen zum Verschließen von Behältern aufweisend eine Trägerschicht 2 und eine Siegelschicht, wobei die Siegelschicht Sollbruchstellen 4 aufweist, und wobei die Trägerschicht von der Siegelschicht abgepeelt werden kann, wobei beim Abpeelen der Bereich der inneren Schicht, der von der geschlossenen Schwächungslinie begrenzt ist, an der äußeren Schicht verbleibt, sodass beim Abpeelen der äußeren Schicht in der inneren Schichte ein Loch entsteht, wobei die Verbundlage 13 der Siegelschicht, die mit der Trägerschicht in Kontakt steht, aus modifiziertes Polypropylen besteht, und wobei die Lage der Trägerschicht, die mit der Verbundlage 13 in Kontakt steht, eine Aluminiumfolie oder eine lackierte Schicht 6 ist.

Diese Druckschrift offenbart ein Verbundmaterial zur Herstellung von Platinen, das zwei Schichten aufweist, die wiederum, unabhängig voneinander, ein- oder mehrlagig ausgebildet sein können, wobei die eine, die innere Schicht, die beim Siegeln dem Gut bzw. dem Behälter zugewandt ist, zumindest eine in sich geschlossene Schwächungslinie (in vielen Fällen auch als Figur, Bereich, Partie bezeichnet) aufweist. Diese Schwächungslinie, bevorzugt durch einen Laser hergestellt, reicht im Idealfall von der Seite, die dem Gut zugewandt ist, fast, aber doch nicht ganz durch die innere Schicht. Weiters kann die äußere Schicht von der inneren Schicht abgepeelt werden, wobei beim Abpeelen der Bereich der inneren Schicht, der von der geschlossenen Schwächungslinie begrenzt ist, an der äußeren Schicht verbleibt, sodass beim Abpeelen der äußeren Schicht in der inneren Schichte ein Loch entsteht, durch das das Gut des Behälters zugänglich ist. Wenn mehrere derartige Schwächungslinien vorgesehen sind, gilt dies mutatis mutandis für jede(n) Figur, Bereich, Partie.

Üblicherweise weist die äußere Schicht eine Aluminiumfolie als Barriereschicht auf, die an ihrer der inneren Schicht zugewandten Seite mit einem Lack zum Schutz des Aluminiums und gegebenenfalls als Haftvermittler versehen ist. Darauf wird, bevorzugt durch Coextrudieren, die innere Schichte aus zumindest einem Polymer aufgebracht, die mit dem Lack so stark, bzw. so schwach verbunden ist, dass einerseits das Abpeelen zuverlässig möglich ist, andererseits der gewünschte Teil der inneren Schicht beim Abpeelen aus der inneren Schicht gelöst wird und auf der äußeren Schichte haften bleibt. Das Trennen der beiden Schichten beim Abpeelen erfolgt somit zwischen dem Lack und der dem Lack benachbarten Polymerschicht.

Diese Stärke der Haftung wird gemäß der genannten Druckschrift durch verschiedene Kombinationen von polaren und unpolaren Stoffen an der Grenze der Schichten, der Kontaktfläche, erreicht und hat sich im Wesentlichen bewährt. Allerdings sind in letzter Zeit Anwendungsgebiete für solche mehrschichtigen Folien erschlossen worden, bei denen die in sich geschlossenen Schwächungslinien der inneren Schicht eine nur sehr kleine Fläche umschließen, sodass pro Flächeneinheit dieser Gebiete eine große Länge an Schwächungslinie vorliegt, was verschiedentlich dazu führt, dass der eigentlich zu entfernende Bereich entweder an der unteren Schicht hängen bleibt, oder, was noch unangenehmer ist, sich zwar entlang der Schwächungslinie ablöst, aber zufolge der Biegung der oberen Schicht beim Abpeelen auch nicht an dieser hängen bleibt, sondern in den Behälter zum Gut fällt. Da es sich dabei fast immer um Lebensmittel handelt, ist dies unangenehm und unerwünscht.

Grundsätzlich liegt die Problematik darin, dass sowohl die Qualität der Schwächungslinie, die üblicherweise durch einen Laser hergestellt wird, trotz aller Bemühungen eine gewisse Schwankungsbreite aufweist, als auch die verwendeten Folien in kleinen Bereichen Abweichungen von ihren globalen, durchschnittlichen Eigenschaften nahezu zwangsläufig aufweisen, und dass bei ungünstiger Addition dieser Toleranzen die genannten Probleme auftreten.

Es besteht somit ein Bedarf an einer Verbindung zwischen den beiden Schichten, die diese Probleme zuverlässig vermeidet, und auch bei sehr kleinflächigen abzunehmenden Partien der inneren Schicht, diese zuverlässig hält, ohne deshalb das Abpeelen der äußeren (oberen) Schicht zu erschweren. Als "kleinflächig" sind dabei Kreise mit Durchmessern unter 12 mm, insbesondere Kreise von maximal 8 mm Durchmesser, ganz besonders von 4 mm Durchmesser und noch darunter anzusehen, bei nicht-kreisförmigen Partien ist der Äquivalenzdurchmesser (=Durchmesser eines Kreises gleicher Fläche) maßgeblich.

Es ist Ziel und Aufgabe der Erfindung hier eine Lösung anzugeben.

Erfindungsgemäß wird diese Lösung durch ein Verbundmaterial erreicht, das die im kennzeichnenden Teil des Anspruches 1 angegebenen Merkmale aufweist und durch eine Platine, die die im kennzeichnenden Teil des Anspruches 4 angegebenen Merkmale aufweist. Mit anderen Worten, es wird zumindest die äußerste Lage der inneren Schichte aus einem Material hergestellt, wie es in den US 2004/0236042, oder der WO 2007/081491, oder der WO 2007/115816 beschrieben ist. Derartige Materialien sind beispielsweise unter der Bezeichnung Vistamaxx^{™}, vertrieben von Exxon Mobil Chemical, im Handel erhältlich. Auch die aus der EP 2 738 216 bekannten PP-Zusammensetzungen sind erfindungsgemäß brauchbar.

Diese Materialien, wie sie in der Literatur beschrieben sind, sind semikristalline Ethylen-Propylen-Copolymere, die im wesentlich frei von Dienen sind. Auch ist die intramolekulare Unterschiedlichkeit der Taktizität statistisch insignifikant.

Die innerste Lage der äußeren Schichte ist die Lackschichte, die gegebenenfalls als Haftvermittler und/oder Schutzschicht (Korrosion, mechanische Beschädigung) für das Aluminium dient, und die fest am Aluminium haftet. Dieser Lack kann jeder der im Stand der Technik verwendeten Lacke für einen solchen Zweck sein.

Das erfindungsgemäß für die äußerste Lage der inneren Schichte verwendete Material weist eine Dichte von ≤ 900 kg/m³, bevorzugt von 879 ±5 kg/m³, und, unabhängig voneinander, die folgenden Eigenschaften auf:
- Die Viskosität bei 190°C liegt bei etwa 1200 mPa.s;
- Die Härte (Shore C) liegt bei etwa 53;
- Die Zugfestigkeit beim Bruch liegt bei etwa 6,2 MPa;
- Die Zugfestigkeit bei 100% bei etwa 4 MPa;
- Die Bruchdehnung bei etwa 1250 %;
- Die Glasübergangstemperatur bei -22°C ± 3°C und
- Die Schmelztemperatur bei 97°C ± 3°C.

Dabei sind 900 kg/m³ als Obergrenze der Dichte nach bisherigen Versuchen genau einzuhalten, die "etwa" Werte in dieser Aufstellung bedeuten eine Bandbreite von ± 5 %; die Bandbreite der Dichte und der Temperaturen ist dort angegeben.

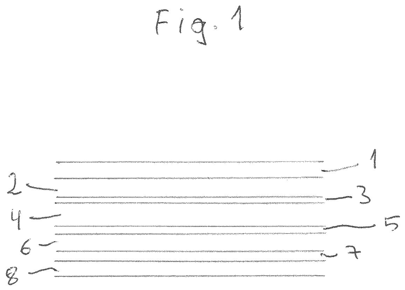

Eine erfindungsgemäße Platine hat beispielsweise, von außen (oben) nach innen (unten), den in der **einzigen Figur** rein schematisch gezeigten, folgenden Aufbau, wobei wegen der im Stand der Technik üblichen Bezeichnung als "Schicht(en)" die eingangs angegebene Nomenklatur "Schichten-Lagen" hier nicht eingehalten werden kann:
1. Druckschutzschicht 1 (der Umgebung zugewandt)
2. Druckschicht 2 (ev. inkl. Druckgrundschicht)
3. Haftvermittler 3
4. Barriereschicht 4, meist Aluminiumfolie
5. Lack 5 (Haftvermittler und/oder Schutzschicht für das Aluminium)
6. erfindungsgemäßes Material enthaltende Schicht 6
7. Innere Siegelschicht aus PP 7
8. Äußere Siegelschicht 8 (dem Gut zugewandt, auf den Behälter gesiegelt)

Es können weitere Schichten vorgesehen sein, als essentielle Lagen (hier wiederum in Übereinstimmung mit der Nomenklatur so genannt) sind die Lagen 4, 6 und 8 anzusehen.

Das erfindungsgemäß verwendete Material 6 wird in einem Anteil von 15-65 Gew.-%, bevorzugt von 20-60 Gew.-% mit PP coextrudiert. Wenn eine innere Siegelschicht 7 (der Begriff "innere" bezieht sich hier auf die Lage innerhalb des Verbundmaterials) aus PP vorhanden ist, so wird vorteilhafterweise das gleiche PP auch für die Lage 6 verwendet. Je größer der Anteil des erfindungsgemäß verwendeten Materials ist, umso dünner kann die Lage 6 ausgebildet werden, was für die Verarbeitbarkeit günstig ist, sodass trotz des höheren Anteils in Summe nicht mehr des doch kostspieligeren Materials verwendet werden muss. Bei höheren Anteilen steigt die Zähigkeit und damit wird das Einreißverhalten besser, selbst wenn die Schichtdicke minimiert wird.

Das PP 7 kann ein PP-Homopolymer sein, dem für die bessere Verarbeitung bei der Coextrusion etwa 30 Gew.-% LDPE oder, alternativ dazu, etwa 20 Gew.-% PP-HMS, oder, wiederum alternativ, 10-30 Gew.-% PP-Randompolymer zugesetzt ist. Diese Prozentsätze beziehen sich auf die Summe des PP-Homopolymer und des Zusatzes (noch ohne dem erfindungsgemäßen Material). Dieses wird dann, für die Lage 6 einfach als "PP" bezeichnet, mit dem erfindungsgemäß verwendeten Material gemischt.

Einzelne dieser Lagen können weggelassen oder durch andere ersetzt werden, wesentlich ist die Lage 6, die direkten Kontakt zur äußeren Schichte (Barriere 4 oder Lack 5) hat, und dass die diese Lage 6 kontaktierende Lage 7, soferne vorhanden, aus PP besteht.

Das Material der Barriereschicht 4 kann neben dem derzeit beliebtesten Aluminium in Form einer Folie aus der Gruppe der Polyester, wie etwa Polyethylenterephthalat (PET), wobei die Polyesterfolie mit einer zusätzlichen Oberflächenbehandlung in Form einer Metallisierung oder einer anderen anorganischen Schicht, zum Beispiel aus SiOx oder AlOx oder auch einer haftvermittelnden Schicht (Primer) zum Auftragen einer Siegelschicht versehen sein kann; der Polyamide, wie etwa PA 6 oder PA 12, oder anderen Materialien dieser Gruppe; der Polyolefine, wie etwa Polyethylen (PE), EthylenCopolymere (EVA, EMA, etc.) oder Mischungen aus diesen, Polypropylen (PP), PP-Copolymere oder andere thermoplastische Polyolefine; Biopolymere auf Basis nachwachsender Rohstoffe, wie etwa aus Stärkepolymeren, aus Poly-milchsäure (PLA), aus auf Lignin basierten Polymeren, aus Polyhydroxyalkanoaten (PHAs), aus entsprechenden Mischungen oder Compounds, aus biologisch abbaubaren/kompostierbaren Rohstoffen, wie etwa speziellen Bio-Polyestern; oder Kombinationen daraus; und der Kaschierkleber ausgewählt ist aus Nasskaschierklebern, Dispersionsklebern, Trockenkaschierklebern, lösungsmittelfreien Klebersystemen, Kaltsiegelklebstoffen oder extrusionsbeschichteter Kaschierung ausgewählt werden.

Die Dicke der Lagen 6 und 7 ist, wie im Stand der Technik, für die mechanischen Eigenschaften bedeutsam, wobei durch den Einsatz des erfindungsgemäß verwendeten Materials bei ansonsten gleichen Bedingungen die mechanischen Eigenschaften verbessert sind, sodass auch über die beiden Lagen gemeinsam eine Reduktion ohne Beeinträchtigung der Eigenschaften möglich ist.

Zum Lack 5, der bei Aluminium als Barriereschicht 4 fast unumgänglich nötig ist, soferne die Oberfläche des Aluminiums nicht auf aufwändige Weise vorbereitet wird, bei zahlreichen der genannten anderen Barriereschichten aber entfallen kann, soll nur kurz ausgeführt werden, dass ein Lösemittellack mit einem Acrylatbindemittel sehr passend ist, da durch Zugabe unterschiedlicher Mengen von mineralischem Füllstoff, insbesondere von Talk die erzielte Verbundhaftung einfach auf einen engen Bereich gebracht werden kann, wobei mit höherem Füllstoffanteil die Verbundhaftung abnimmt.

Der gut verwendbare Acrylatlack kann ein handelsüblicher "Kombi-Heißsiegellack" sein, worunter Kombi-Lack Systeme zu verstehen sind, die - in der Anwendung im Stand der Technik bei Siegelplatinen beispielsweise für Joghurtbecher sowohl gegen Polystyrol- als auch gegen PP-Becher gleichermaßen peelfähig siegeln (zB ACTEseal^{®} von ACTEGA, auch wasserbasiert erhältlich oder ODASeal von der Hans Jung GmbH &Co.KG).

Es gibt im Stand der Technik auch andere verwendbare sogenannte Kombi-Lacksysteme, bei denen, diese enthalten beispielsweise Styrolbutadien-Copolymere oder auch Polyesterharze. In diese Richtung ist auch der Lack der DE 10 2011 086 327 A, ebenfalls mit Füllmittel zur Regulierung der Haftfähigkeit, zu nennen. Weiters wären auch solche zu nennen, die Bindemittel auf Basis von Vinylchloridpolymeren enthalten (zB unter VINNOL^{®} von Wacker Polymers erhältlich); diese sind aufgrund der häufigen Kundenvorgabe nach PVC-Freiheit aber nicht immer anwendbar, auch wenn sie technisch verwendbar wären.

Es umfasst somit die äußere Schichte die Lagen 1-5, die innere Schichte die Lagen 6-8; das Abpeelen erfolgt somit zwischen den Lagen 5 und 6. Die Ausbildung der Schwächungslinien, die aus Festigkeitsgründen erst nach der Vereinigung der Lagen 1-8, zumeist mittels Laser, vorgenommen wird, soll die Lagen 7-8 erfassen, nicht aber die Lage 6. Auch wenn dies zumeist erreicht wird, kommt es doch zu einer thermischen Beeinflussung auch der Lage 6, die bei Verwendung des erfindungsgemäßen Materials, anders als im Stand der Technik, aber zu keiner merklichen Reduktion oder auch nur Änderung des Haftungsvermögens zwischen den Lagen 5 und 6 führt.

Während im Stand der Technik stark schwankende Verbundhaftungen von nur 0,25 bis 0,5 N/100 mm (gemessen nach DIN 55543-5 zur Bestimmung der Verbundhaftung) und oft auch leicht darunter erhalte werden, können mit den erfindungsgemäßen Folien zuverlässig Werte von mindestens 0,8 N/100 mm und ohne großen Aufwand von 1,0 N/100 mm und, wenn gewünscht, auch mehr erzielt werden. Diese Werte sichern sowohl ein zuverlässiges Anhaften der abgetrennten Bereiche, auch wenn diese sehr klein sind, an der äußeren Schicht als auch ein Abpeelen ohne Gefahr des Einreißens oder Ausreißens.

Die Erfindung ist nicht auf die beschriebenen Ausführungsbeispiele beschränkt, sondern kann verschiedentlich abgewandelt werden. Da sie das Abpeelen betrifft, sind insbesondere die Lagen, die daran nicht beteiligt sind, ohne Probleme zu ändern und an das jeweilige Einsatzgebiet anzupassen, was dem Fachmann auf dem Gebiete der Verpackungsfolien in Kenntnis der Erfindung ein Leichtes ist. Dies betrifft auch die Aluminiumfolie, denn wenn auch Aluminium ein hervorragendes Barrierematerial ist, so bestehen doch seit einigen Jahren starke Tendenzen, ohne Aluminium auszukommen. Es kann dann jedes andere Material als Barriereschicht verwendet werden, soferne es entweder mit dem Lack 5 versehen werden kann, wie Aluminium, oder von sich aus solche Eigenschaften betreffend das Anhaften der erfindungsgemäßen Schicht 6 aufweist wie der Lack.

In der Beschreibung und den Ansprüchen werden die Begriffe "vorne", "hinten", "oben", "unten" und so weiter in der landläufigen Form und unter Bezugnahme auf den Gegenstand in seiner üblichen Gebrauchslage, gebraucht. Das heißt, dass bei einer Waffe die Mündung des Laufes "vorne" ist, dass der Verschluss bzw. Schlitten durch die Explosionsgase nach "hinten" bewegt wird, etc.. Bei Fahrzeugen ist "vorne" die übliche Fortbewegungsrichtung, Bei Verpackungen ist der Behälter "unten" und die Platine "oben", die Unterseite der Platine ist dem Gut zugewandt, die Außenseite der Umgebung.

Es soll noch darauf hingewiesen werden, dass in der Beschreibung und den Ansprüchen Angaben wie "unterer Bereich" eines Gehänges, Reaktors, Filters, Bauwerks, oder einer Vorrichtung oder, ganz allgemein, eines Gegenstandes, die untere Hälfte und insbesondere das untere Viertel der Gesamthöhe bedeutet, "unterster Bereich" das unterste Viertel und insbesondere einen noch kleineren Teil; während "mittlerer Bereich" das mittlere Drittel der Gesamthöhe (Breite - Länge) meint. All diese Angaben haben ihre landläufige Bedeutung, angewandt auf die bestimmungsgemäße Position des betrachteten Gegenstandes.

In der Beschreibung und den Ansprüchen bedeutet "im Wesentlichen", soferne nichts anderes an Ort und Stelle angegeben ist, eine Abweichung von bis zu 10 % des angegebenen Wertes, wenn es physikalisch möglich ist, sowohl nach unten als auch nach oben, ansonsten nur in die sinnvolle Richtung, bei Gradangaben (Winkel und Temperatur) sind damit ± 10° gemeint.

Alle Mengenangaben und Anteilsangaben, insbesondere solche zur Abgrenzung der Erfindung, soweit sie nicht die konkreten Beispiele betreffen, sind mit ± 10 % Toleranz zu verstehen, somit beispielsweise: 11 % bedeutet: von 9,9 % bis 12,1 %. Bei Bezeichnungen wie bei: "ein Lösungsmittel" ist das Wort "ein" nicht als Zahlwort, sondern als unbestimmter Artikel oder als Fürwort anzusehen, wenn nicht aus dem Zusammenhang etwas anderes hervorgeht.

Der Begriff: "Kombination" bzw. "Kombinationen" steht, soferne nichts anderes angegeben, für alle Arten von Kombinationen, ausgehend von zwei der betreffenden Bestandteile bis zu einer Vielzahl oder aller derartiger Bestandteile, der Begriff: "enthaltend" steht auch für "bestehend aus".

Die in den einzelnen Ausgestaltungen und Beispielen angegebenen einzelnen Merkmale und Varianten können (soferne nicht an Ort und Stelle etwas anderes ausgeführt ist) mit denen der anderen Beispiele und Ausgestaltungen frei kombiniert und insbesondere zur Kennzeichnung der Erfindung in den Ansprüchen ohne zwangläufige Mitnahme der anderen Details der jeweiligen Ausgestaltung bzw. des jeweiligen Beispiels verwendet werden

### Bezugszeichenliste:

| | | | |
|---|---|---|---|
| 1 | Druckschutzlack | 5 | Lack |
| 2 | Druckschicht | 6 | Erfindungsgemäßes Material |
| 3 | Haftvermittler | 7 | Innere Siegelschicht aus PP |
| 4 | Barriereschicht | 8 | Äußere Siegelschicht |

## Patentansprüche

1. Verbundmaterial zur Herstellung von Platinen zum Verschließen von Behältern aufweisend zumindest zwei Schichten, die wiederum, unabhängig voneinander, ein- oder mehrlagig sind, wobei die eine, die innere Schicht, die beim Siegeln dem Behälter zugewandt ist, zumindest eine in sich geschlossene Schwächungslinie aufweist, und wobei die äußere Schicht von der inneren Schicht abgepeelt werden kann, wobei beim Abpeelen der Bereich der inneren Schicht, der von der geschlossenen Schwächungslinie begrenzt ist, an der äußeren Schicht, die bevorzugt eine Barriereschicht (4) aufweist, verbleibt, sodass beim Abpeelen der äußeren Schicht in der inneren Schichte ein Loch entsteht, **dadurch gekennzeichnet, dass** die Lage (6) der inneren Schicht, die mit der äußeren Schicht in Kontakt steht, semikristalline Ethylen-Propylen-Copolymere, die im wesentlich frei von Dienen sind, aufweist, und die Lage der äußeren Schicht, die mit dieser Lage (6) in Kontakt steht, die Barriereschicht (4) oder ein Lack (5) ist.

2. Verbundmaterial nach Anspruch 1, **dadurch gekennzeichnet, dass** das Ethylen-Propylen-Copolymer der Lage (6) eine Dichte von unter 900 kg/m³, bevorzugt von 879 kg/m³ aufweist.

3. Verbundmaterial nach Anspruch 1 oder 2, **dadurch gekennzeichnet, dass** das Ethylen-Propylen-Copolymer der Lage (6) zumindest eine der folgenden Eigenschaften aufweist:
- Die Viskosität bei 190°C liegt bei etwa 1200 mPa.s ± 5 %;
- Die Härte (Shore C) liegt bei etwa 53 ± 5 %;
- Die Zugfestigkeit beim Bruch liegt bei etwa 6,2 MPa ± 5 %;
- Die Zugfestigkeit bei 100% liegt bei etwa 4 MPa ± 5 %;
- Die Bruchdehnung liegt bei etwa 1250 % ± 5 %;
- Die Glasübergangstemperatur liegt bei -22°C ± 3°C und
- Die Schmelztemperatur liegt bei 97°C ± 3°C.

4. Verbundmaterial nach einem der Ansprüche 1 bis 3, **dadurch gekennzeichnet, dass** die Barriereschicht (4) aus Aluminium ist und dass ein Lack (5) vorgesehen ist.

5. Verbundmaterial nach einem der Ansprüche 1 bis 4, **dadurch gekennzeichnet, dass** der Lack (5) ein Lösemittellack mit einem Acrylatbindemittel und bevorzugt mit mineralischem Füllstoff, insbesondere Talk, ist.

6. Verbundmaterial nach einem der Ansprüche 1 bis 4, **dadurch gekennzeichnet, dass** der Lack (5) ein sogenanntes Kombi-Lacksystem ist, bevorzugt Styrolbutadien-Copolymere oder Polyesterharze enthaltend, und mineralischen Füllstoff, insbesondere Talk, aufweisend.

7. Platine zum Verschließen von Behältern, bestehend aus einem Verbundmaterial, das zumindest zwei Schichten aufweist, die wiederum, unabhängig voneinander, ein- oder mehrlagig sind, wobei die eine, die innere Schicht, die beim Siegeln dem Behälter zugewandt ist, zumindest eine in sich geschlossene Schwächungslinie aufweist, und wobei die äußere Schicht von der inneren Schicht abgepeelt werden kann, wobei beim Abpeelen der Bereich der inneren Schicht, der von der geschlossenen Schwächungslinie begrenzt ist, an der äußeren Schicht verbleibt, sodass beim Abpeelen der äußeren Schicht in der inneren Schichte ein Loch entsteht, **dadurch gekennzeichnet, dass** die Lage (6) der inneren Schicht, die mit der äußeren Schicht in Kontakt steht, semikristalline Ethylen-Propylen-Copolymeren, die im wesentlich frei von Dienen sind, aufweist, und die Lage der äußeren Schicht, die mit dieser Lage (6) in Kontakt steht, die Barriereschicht (4) oder ein Lack (5) ist.

8. Platine nach Anspruch 7, **dadurch gekennzeichnet, dass** das Ethylen-Propylen-Copolymer eine Dichte von unter 900 kg/m³, bevorzugt von 879 kg/m³ aufweist.

## Claims

1. Composite material for producing lids for closing containers, comprising at least two coatings, which in turn, independently of one another, are single or multi-layered, with one, the inner coating, which faces the container during sealing, having at least one self-contained line of weakness, and it being possible for the outer coating to be peeled off the inner coating, the region of the inner coating which is delimited by the contained line of weakness remaining on the outer coating, which preferably has a barrier coating (4), during the peeling process, so that a hole is formed in the inner coating when the outer coating is peeled off, **characterised in that** the layer (6) of the inner coating which is in contact with the outer coating comprises semi-crystalline ethylene-propylene copolymers which are substantially free of dienes, and the layer of the outer coating, which is in contact with this layer (6), is the barrier coating (4) or a lacquer (5).

2. Composite material according to claim 1, **characterised in that** the ethylene-propylene copolymer of the layer (6) has a density of less than 900 kg/m³, preferably 879 kg/m³.

3. Composite material according to either claim 1 or claim 2, **characterised in that** the ethylene-propylene copolymer of the layer (6) has at least one of the following properties:
- The viscosity at 190°C is approximately 1200 mPa.s ± 5%;
- The hardness (Shore C) is approximately 53 ± 5%;
- The tensile strength at break is approximately 6.2 MPa ± 5%;
- The tensile strength at 100% is approximately 4 MPa ± 5%;
- The elongation at break is approximately 1250% ± 5%;
- The glass transition temperature is -22°C ± 3°C and
- The melting temperature is 97°C ± 3°C.

4. Composite material according to any of claims 1 to 3, **characterised in that** the barrier coating (4) is made of aluminium and **in that** a lacquer (5) is provided.

5. Composite material according to any of claims 1 to 4, **characterised in that** the lacquer (5) is a solvent-based lacquer having an acrylate binder and preferably having a mineral filler, in particular talc.

6. Composite material according to any of claims 1 to 4, **characterised in that** the lacquer (5) is a so-called combination lacquer system, preferably containing styrenebutadiene copolymers or polyester resins, and mineral filler, in particular talc.

7. Lid for closing containers, consisting of a composite material which has at least two coatings, which in turn, independently of one another, are single or multi-layered, with the one, the inner coating, which faces the container during sealing, having at least one self-contained line of weakness, and it being possible for the outer coating to be peeled off the inner coating, the region of the inner coating which is delimited by the contained line of weakness remaining on the outer coating during the peeling process, so that a hole is formed in the inner coating when the outer coating is peeled off, **characterised in that** the layer (6) of the inner coating which is in contact with the outer coating comprises semi-crystalline ethylene-propylene copolymers which are substantially free of dienes, and the layer of the outer coating, which is in contact with this layer (6), is the barrier coating (4) or a lacquer (5).

8. Lid according to claim 7, **characterised in that** the ethylene-propylene copolymer has a density of less than 900 kg/m³, preferably 879 kg/m³.

## Revendications

1. Matériau composite pour la fabrication de platines pour la fermeture de récipients, présentant au moins deux couches qui, à leur tour, indépendamment l'une de l'autre, sont monocouches ou multicouches, dans lequel l'une des couches, la couche intérieure, qui est tournée vers le récipient lors du scellage, présente au moins une ligne d'affaiblissement fermée sur elle-même, et dans lequel la couche extérieure peut être décollée de la couche intérieure, dans lequel lors du décollement la zone de la couche intérieure, qui est délimitée par la ligne d'affaiblissement fermée, reste sur la couche extérieure, qui présente de préférence une couche barrière (4), de sorte que lors du décollement de la couche extérieure, un trou se forme dans la couche intérieure, **caractérisé en ce que** la strate (6) de la couche intérieure, qui est en contact avec la couche extérieure, présente des copolymères éthylène-propylène semi-cristallins, qui sont sensiblement exempts de diènes, et la strate de la couche extérieure, qui est en contact avec cette strate (6), est la couche barrière (4) ou un vernis (5).

2. Matériau composite selon la revendication 1, **caractérisé en ce que** le copolymère éthylène-propylène de la strate (6) présente une densité inférieure à 900 kg/m³, de préférence de 879 kg/m³.

3. Matériau composite selon la revendication 1 ou 2, **caractérisé en ce que** le copolymère éthylène-propylène de la strate (6) présente au moins l'une des propriétés suivantes :
- la viscosité à 190 °C est d'environ 1200 mPa.s ± 5 % ;
- la dureté (Shore C) est d'environ 53 ± 5 % ;
- la résistance à la traction à la rupture est d'environ 6,2 MPa ± 5 % ;
- la résistance à la traction à 100 % est d'environ 4 MPa ± 5 % ;
- l'allongement à la rupture est d'environ 1250 % ± 5 % ;
- la température de transition vitreuse est de -22 °C ± 3 °C et
- la température de fusion est de 97 °C ± 3 °C.

4. Matériau composite selon l'une quelconque des revendications 1 à 3, **caractérisé en ce que** la couche barrière (4) est en aluminium et qu'un vernis (5) est prévu.

5. Matériau composite selon l'une quelconque des revendications 1 à 4, **caractérisé en ce que** le vernis (5) est un vernis à base de solvant avec un liant acrylate et de préférence avec une charge minérale, notamment du talc.

6. Matériau composite selon l'une quelconque des revendications 1 à 4, **caractérisé en ce que** le vernis (5) est un système de vernis dit combiné, contenant de préférence des copolymères styrène-butadiène ou des résines polyester, et présentant une charge minérale, en particulier du talc.

7. Platine pour la fermeture de récipients, constituée d'un matériau composite, qui présente au moins deux couches qui, à leur tour, indépendamment l'une de l'autre, sont monocouches ou multicouches, dans laquelle l'une des couches, la couche intérieure, qui est tournée vers le récipient lors du scellage, présente au moins une ligne d'affaiblissement fermée sur elle-même, et dans laquelle la couche extérieure peut être décollée de la couche intérieure, dans laquelle lors du décollement la zone de la couche intérieure, qui est délimitée par la ligne d'affaiblissement fermée, reste sur la couche extérieure, de sorte que lors du décollement de la couche extérieure un trou se forme dans la couche intérieure, **caractérisée en ce que** la strate (6) de la couche intérieure, qui est en contact avec la couche extérieure, présente des copolymères éthylène-propylène semi-cristallins, qui sont sensiblement exempts de diènes, et la strate de la couche extérieure, qui est en contact avec cette strate (6), est la couche barrière (4) ou un vernis (5).

8. Platine selon la revendication 7, **caractérisée en ce que** le copolymère éthylène-propylène présente une densité inférieure à 900 kg/m³, de préférence de 879 kg/m³.
